# FASCICULE DE BREVET EUROPEEN

(11) **EP 0 536 015 B1**
(45) Date de publication et mention de la délivrance du brevet: **14.08.1996**
(21) Numéro de dépôt: 92402475.5
(22) Date de dépôt: 10.09.1992
(51) Int. Cl.: B01D 17/035, B03D 1/16

(54) **Cyclones-turbines, notamment pour l'équipement de flottateurs destinés au traitement d'eaux polluées par des hydrocarbures**
Zyklon-Turbinen für den Einbau in Flotationsvorrichtungen zur Behandlung kohlenwasserstoffverschmutzter Abwässer
Cyclone-turbines for installation in flotation devices for treatment of waste water contaminated with hydrocarbons

(30) Priorité: 28.11.1991 FR 9114721; 03.10.1991 FR 9112197
(43) Date de publication de la demande: 07.04.1993
(73) Titulaire: CECA S.A., F-92800 Puteaux (FR)
(72) Inventeur: Hamdan, Adnan, F-64000 Pau (FR)
(74) Mandataire: Haicour, Philippe

(56) Documents cités:
- DE-A- 3 808 154
- FR-A- 2 605 898
- GB-A- 810 521
- US-A- 2 274 658

## Description

La présente invention concerne une cyclone-turbine perfectionnée, destinée notamment à l'équipement de dispositifs pour la séparation par flottation de liquides non miscibles. Elle s'adresse plus particulièrement au traitement des eaux polluées par des hydrocarbures.

Il est connu de traiter de tels mélanges d'eaux et d'hydrocarbures par flottation, soit par air dissous (systèmes D.A.F., mis pour "dissolved air flotation"), soit par air ou gaz induit (systèmes I.A.F., mis pour "induced air flotation"). Dans les dispositifs I.A.F., l'induction d'air ou de gaz est générée soit par des injecteurs, soit par des turbines de type rotor-stator. C'est à cette dernière catégorie d'appareils qu'appartient le dispositif selon la présente invention. On connait ainsi des flottateurs de type I.A.F. fonctionnant grâce à l'injection d'air ou de gaz par turbine, qui sont constitués d'une cuve cylindrique aménagée en une ou plusieurs zones passives dans lesquelles s'opèrent la tranquillisation ou la décantation des huiles, et en une ou plusieurs zones actives au sein desquelles un ensemble rotor/stator fonctionne comme dispositif d'injection d'air de flottation, et qui débouchent sur un ou plusieurs puits collecteurs récoltant les écumes formées dans les compartiments actifs. On trouve des informations sur de tels dispositifs dans des notices de constructeurs et dans divers brevets, par exemple le brevet français n° 2 605 898.

Ces turbines, dont le rôle est de provoquer par la rotation du rotor une dépression dans la cheminée qui les surmonte, d'aspirer ainsi le gaz de couverture et de le projeter contre le stator créant ainsi autour du stator le nuage de gaz qui assurera la flottation, sont simplement constituées selon l'art antérieur d'un rotor à pales à l'intérieur de la cage d'un stator à doigts de section rectangulaire. Ces engins présentent un certain nombre d'inconvénients:
a) instabilité du débit d'air ou de gaz, due à la rupture du profil d'écoulement diphasique dans la cheminée du rotor: le rotor tourne en milieu diphasique eau/air, ce qui a pour conséquence une fluctuation considérable de la puissance électrique absorbée;
b) effet de flottation non assuré avec des turbines traitant des débits supérieurs à 10 m³/h, qui ne fonctionnent plus qu'en agitateurs, la dépression créée par le rotor n'étant plus suffisante pour entraîner le gaz de couverture jusqu'au stator.

De ce fait, et bien que leur fonctionnement à l'échelle pilote soit acceptable, les matériels décrits dans l'art antérieur, lorsqu'ils sont réalisés à l'échelle des unités industrielles, ne procurent plus un effet de flottation satisfaisant.

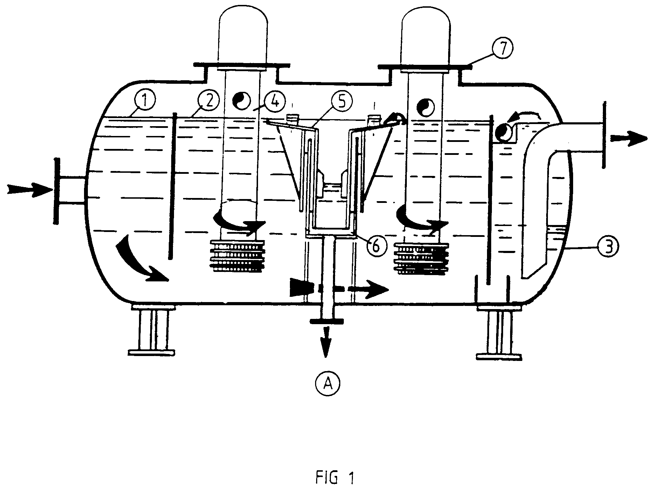

Les cyclones-turbines selon l'invention sont définies par la revendication 1. Elles sont notamment destinées à équiper des séparateurs constitués (fig.1) d'une cuve cylindrique ou rectangulaire divisée par des cloisons en plusieurs compartiments distincts : un compartiment d'homogénéisation du débit d'alimentation (1), des cellules de flottation (2) et un compartiment de tranquillisation (3), le cas échéant suivi d'un pot assurant la fonction de joint hydraulique avec l'extérieur.

Chaque cellule est munie d'une cyclone-turbine (4) et d'une goulotte d'écrémage autostable en commun avec une cellule adjacente. On préfère associer les cyclones-turbines selon l'invention à des goulottes autostables (5) telles que décrites dans la demande de brevet français FR-A-2 682 048, qui peuvent se déplacer verticalement grâce à un puits d'écrémage (6) dont les parois fixes servent de guide-support.

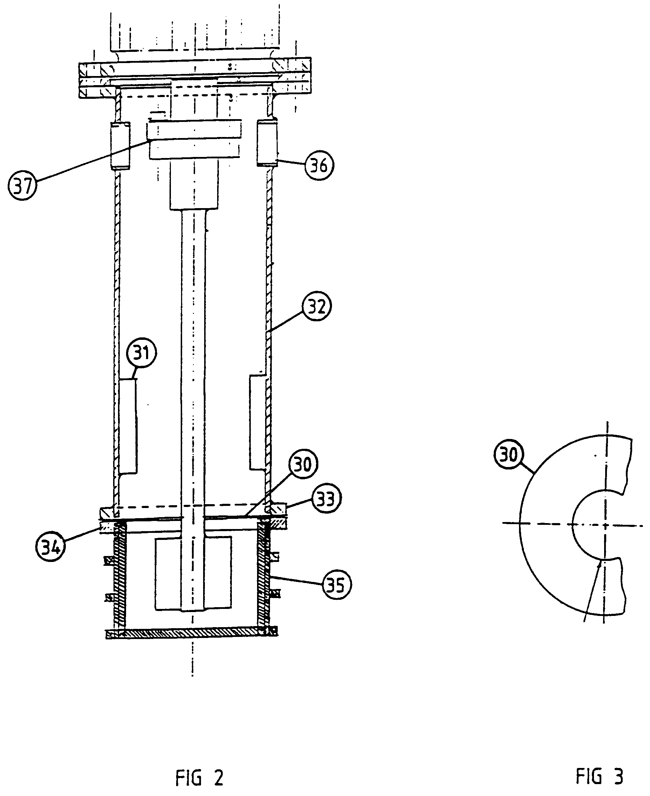

Les cyclones-turbines (fig. 2 et 3) selon l'invention sont du type stator-rotor. Elles sont équipées chacune d'un disque d'étranglement (30) percé d'une ouverture permettant de créer une dépression suffisante pour vaincre la colonne d'eau au-dessus du rotor. Ce disque (fig. 2 et 3), d'une épaisseur de quelques millimètres, est monté en sandwich entre les brides de la cheminée et de la cage d'écureuil (35). Il peut être en acier inoxydable avec un diamètre de l'ouverture approximativement égal au diamètre extérieur du rotor. Des chicanes (31) sont soudées sur les parois internes de la cheminée du rotor (32); de préférence au nombre de trois, elles sont disposées symétriquement, par exemple à une trentaine de centimètres de la bride (33-34); on les réalisera plutôt en acier; à titre indicatif, leurs dimensions sont comprises entre 100 X 40 X 6 mm et 200 X 60 X 4 mm. Elles permettent d'obtenir un profil d'écoulement en vortex stable. Le dimensionnement d'une cyclone-turbine se fait à partir de plusieurs données hydrodynamiques principales, à savoir:
- la vitesse tangentielle à l'extrémité du rotor, cette vitesse étant constante permet de lier numériquement le diamètre à la vitesse de rotation du rotor;
- les dimensions de la cellule, en relation avec le temps de séjour dans l'appareil;
- le débit et les propriétés physiques du liquide à traiter.

La puissance absorbée par la turbine ainsi que la vitesse critique du rotor sont calculées à partir des propriétés mécaniques du rotor et des caractéristiques des fluides à traiter. A titre d'exemple, les cyclones-turbines peuvent traiter des débits allant jusqu'à 100 m³/h d'eau en générant un débit diphasique global de 300 à 800 m³/h ; la puissance absorbée par turbine peut varier, selon le débit à traiter de 0,5 à 16 kW.

La conjugaison de la vitesse tangentielle du rotor avec le disque d'étranglement et les chicanes de stabilisation du vortex permet à la turbine de générer un écoulement diphasique gaz/eau régulier. Le rapport des débits eau/gaz est de l'ordre de trois. De façon avantageuse, une traverse de cheminée (36) a pour but d'empêcher la montée du vortex et en conséquence, la projection d'eau sur les mousses formées à l'extérieur de la cheminée. A noter que l'emploi de telle turbines-cyclones perfectionnées n'est pas limité aux flottateurs, mais peut s'étendre à toute application de transfert gaz-liquide.

Le stator (35) de la cyclone-turbine selon l'invention est avantageusement construit en polypropylène lorsque la température du fluide à traiter doit rester inférieure à 50°C, ou en fibre de verre ou acier pour des températures de fonctionnement prévues jusqu'à 110°C; le rotor, qui est en matériau ordinaire (acier inox ou acier revêtu), comporte un nombre plutôt réduit de pales, préférentiellement compris entre quatre et sept. En outre, ces cyclones-turbines préférentiellement sont montées de façon à ce qu'il soit possible de leur faire adopter l'une ou l'autre d'une position haute ou basse, la position haute étant la position ordinaire et la position basse pouvant être obtenue en intercalant une pièce entre les brides de l'accouplement (37). Pour une vitesse donnée du rotor, l'épaisseur de cette pièce permet d'agir directement sur le débit de gaz.

Ainsi réalisés, ces dispositifs d'injection d'air induit sont des appareils perfectionnés grâce auxquels il est maintenant possible de contrôler correctement le débit de l'air ou du gaz et le rapport eau/air (gaz), et de maîtriser la production des mousses. Ces matériels sont relativement légers, de construction économique et raisonnablement consommateurs d'énergie.

## Revendications

1. Cyclone-turbine du type stator-rotor constituée d'un rotor à pales à l'intérieur de la cage (35) d'un stator à doigts de section rectangulaire surmontée d'une cheminée (32), caractérisée en ce qu'elle comporte :
un disque d'étranglement (30) sous la forme d'une plaque percée d'une ouverture et située de façon amovible entre la cage (35) du stator et la cheminée (32) qui la surmonte, le diamètre de l'ouverture étant inférieur aux diamètres internes du stator et de la cheminée,
des chicanes sous la forme de plaquettes rectangulaires (31) fixées longitudinalement et symétriquement sur une partie basse de la paroi de la cheminée (32).

2. Appareil flottateur pour la séparation de liquides non miscibles, notamment la séparation d'eaux et de polluants hydrocarbonés constitué d'une cuve cylindrique ou rectangulaire divisée par des cloisons en un compartiment d'homogénéisation du débit d'alimentation (1), des cellules de flottation (2) munies de cyclones-turbines et d'un puits d'écrémage (6), caractérisé en ce qu'il incorpore les cyclones-turbines selon la revendication 1.

## Claims

1. Cyclone-turbine of the stator-rotor type consisting of a bladed rotor inside the cage (35) of a stator having fingers of rectangular cross-section, this cage being surmounted by a riser (32), characterized in that it includes:
a throttling disc (30) in the form of a plate drilled with an opening and located removably between the cage (35) of the stator and the riser (32) which surmounts it, the diameter of the opening being less than the internal diameters of the stator and of the riser,
baffles in the form of small rectangular plates (31) fixed longitudinally and symmetrically on a lower part of the wall of the riser (32).

2. Flotation apparatus for separating immiscible liquids, especially for separating water and hydrocarbon contaminants, consisting of a cylindrical or rectangular vessel divided by partitions into a feed-flow homogenization compartment (1) and flotation cells (2) provided with cyclone-turbines and with a skimming well (6), characterized in that it incorporates the cyclone-turbines according to Claim 1.

## Patentansprüche

1. Zyklonturbine (Wirbelturbine) vom Typ Stator-Rotor, bestehend aus einem Blattrotor im Inneren des Gehäuses (35) eines Stators mit Zapfen mit rechtwinkligem Schnitt, über dem sich ein Schacht (32) befindet, dadurch gekennzeichnet, daß sie enthält:
eine Scheibe zum Durchlaß (30) in Form einer mit einer Öffnung durchbohrten Scheibe, die sich in herausnehmbarer Weise zwischen dem Gehäuse (35) des Stators und dem Schacht (32) befindet, der auf dem Gehäuse (35) befindlich ist, wobei der Durchmesser der Öffnung kleiner als die inneren Durchmesser des Stators und des Schachtes ist,
Ablenkvorrichtungen in Form rechtwinkliger Platten, die der Länge nach und symmetrisch auf einem unteren Teil der Wandung des Schachtes (32) befestigt sind.

2. Flotationsapparatur zur Trennung nichtmischbarer Flüssigkeiten, insbesondere zur Trennung von Wasser und Kohlenwasserstoffverunreinigungen, bestehend aus einem zylindrischen oder rechtwinkligen Behältnis, das mittels Zwischenwänden unterteilt ist in einen abgetrennten Teil zur Homogenisierung des zugeführten Durchflusses (1), Flotationszellen (2), ausgestattet mit Zyklonturbinen (Wirbelturbinen), und einem Schacht zum Abschöpfen (6), dadurch gekennzeichnet, daß sich in der Apparatur Zyklonturbinen (Wirbelturbinen) nach Anspruch 1 befinden.
